# EUROPEAN PATENT SPECIFICATION

(11) **EP 3 586 172 B1**
(45) Date of publication and mention of the grant of the patent: **01.04.2026**
(21) Application number: 18708868.7
(22) Date of filing: 22.02.2018
(51) Int. Cl.: G01V 5/12

(54) **REAL-TIME CORRECTION OF CALIBRATION CONSTANTS OF A BORE-HOLE LOGGING TOOL USING A REFERENCE DETECTOR**
ECHTZEITKORREKTUR VON KALIBRIERUNGSKONSTANTEN EINES BOHRLOCHMESSWERKZEUGS UNTER VERWENDUNG EINES REFERENZDETEKTORS
CORRECTION EN TEMPS RÉEL DE CONSTANTES D'ÉTALONNAGE D'UN OUTIL DE DIAGRAPHIE DE TROU DE FORAGE À L'AIDE D'UN DÉTECTEUR DE RÉFÉRENCE

(30) Priority: 24.02.2017 US 201762463048 P
(43) Date of publication of application: 01.01.2020
(73) Proprietor: VisuRay Technology LTD, 1058 Sliema (MT)
(72) Inventor: TEAGUE, Philip, 77386 Spring (US); SLOAN, Robert, 84098 Park City (US)
(74) Representative: Schneiders & Behrendt Bochum
(86) International application number: PCT/US2018/019148
(87) International publication number: WO 2018/156712

(56) References cited:
- WO-A2-2012/058579
- GB-A- 2 444 801
- US-A1- 2012 138 782
- US-A1- 2013 287 174

## Description

### Field of the Invention

The present invention relates generally to means for real-time correction of calibration constants of a bore-hole logging tool, and in a particular though non-limiting embodiment to means of real-time correction of calibration constants of a logging tool using a reference detector.

### Background

In borehole formation density logging, it is important to ensure the highest accuracy of data, whereby any variation in that data is a result of the change in scattering and attenuation properties of the formation itself (formation density) or controllable borehole effects. When using electronic radiation emitting source tubes as a replacement for radio-active isotope-based radiation sources, an inherent variability is introduced into the measurement due to the unstable nature of the output of the source tube and its power supply - an issue which is not encountered during the use of highly stable long half-life radio isotopes. As a result, the variations in the measured data which would normally be attributable to formation density alone can contain a variable component of the instability of the source tube itself.

With market available borehole logging tools, the formation-facing detectors are calibrated through the use of small radioisotopes which are located within the detector assembly. Radioisotopes such as ¹³⁷Cs are employed due to the dominant and narrow energy peaks which do not contribute greatly to the output count rate of the detector but can be actively used as an energy marker by the detector electronics to modify the gain control voltage of the photomultiplier tube such that the output is stabilized against temperature variations and other environmental factors. However, market available borehole logging tools employ radioisotopes as their primary radiation source to illuminate the formation surrounding the borehole. Due to the relatively long half-life of the radioactive isotopes employed as primary radiation sources, their output is highly stable and predictable over the period of a borehole logging operation, and the exact output of the isotope can be measured at the surface prior to the operation to use as a reference point. Because of the highly stable output of the primary radiation source, and the gain stabilization control isotope method employed within the detector systems, the only two major variants in the statistical output of the formation-facing detectors are the change in scattering and attenuation properties of the formation itself; and the offset of the detectors from the borehole wall, which can introduce direct radiation from the primary source being counted by the detectors as a result of borehole propagation of the primary radiation through the borehole fluid between the primary source and the detector. The former being the desired measurement and the latter being compensated for by the use of more than one detector, each linearly offset along the longitudinal direction of the borehole from the primary source.

If x-ray source tubes are used as a replacement for the radio-active isotope, instabilities can be introduced into the output of the source. Typically, the output of an x-ray source can be controlled by means of an electrical feedback loop consisting of a sensing circuit connected to the highest voltage stage of the high voltage power supply, which is then used to regulate the input voltage of high voltage power supply with the aim of stabilizing the supply voltage of an x-ray tube. However, small changes in the geometry of the source tube itself, *e.g.,* due to thermal expansion or contraction, parasitic electronic charges causing electron beam movement, beam-spot focusing variations or target anode to collimation geometry variations, can lead to minor variations in the geometry and spectrum of the output beam of the source, directly affecting the accuracy of the formation count-rate measurement detrimentally.

Various means have been published which attempt to mitigate this issue by additional control of the source tube itself or through adaptive calibration of the formation-facing detectors.

For example, US 7,564,948 B2 discloses a reference detector placed at the opposite end of a through-shielding channel (thereby collimating the primary x-ray signal) and additionally filtered via various materials to produce a bi-peak spectrum. The energy and intensity of the two peaks is then analyzed and used as a direct feedback to control either the input voltage or current, or both, of the x-ray tube in an attempt to stabilize the x-ray output.

US 7,960,687 B1 discloses a reference detector placed at the opposite end of an elbowed through-shielding channel (thereby collimating the primary x-ray signal) and additionally filtered via various materials to produce a multi or bi-peak spectrum. The elbow-shaped geometry is employed to help the reference detector's tendency to saturate due to the intensity of a direct primary radiation beam. The energy and intensity of the peaks is then analyzed and used as a direct feedback to control or actively modify the control voltage for the stabilization gain of the formation facing detectors' photo multiplier tubes, in an attempt to actively compensate for the instabilities in the output of the x-ray source. In short, the reference proposes to replace the inherent gain stability of an embedded micro-isotope-based approach with an unstable x-ray source instability-based feedback gain stabilization method. The logged data would therefore be permanently modified at the detector and all record of the actual statistical output, compared to a micro-isotope gain stabilized detector, would be lost. Consequently, any control algorithm errors could not later be corrected for at the surface.

US 7,564,948 B2 and US 7,960,687 B1 disclose systems that directly control either the source tube based on the reference detector output or the formation-facing detectors' stabilization gain based on the reference detector output (spectral reference feedback loop). The references teach that the detected output of the x-ray tube to determine the correct calibration constant corrections to be substituted during the computation of detector count-rate output prior to or during the density computation itself. WO 2012/058579 A2 describes a tool for measuring of a core sample inside the tool and not of a formation surrounding the borehole. WO 2012/058579 A2 describes an x-ray based tool for measurements in a borehole with a reference detector, which is used to monitor the output of an x-ray source, such that the reference detector's output effects an adjustment of the operating voltage of the X-ray generator, to insure a stable flux and spectrum of emitted X-rays. US 2012/138782 A1 relates to techniques for logging-while-drilling (LWD) and, more particularly, to techniques for determining formation properties using an LWD tool incorporating an electronic radiation generator, such as an electronic X-ray generator. GB 2 444 801 A discloses an apparatus and a method for evaluating a formation surrounding a borehole using an x-ray generator. US 2013/287174 A1 relates to X-ray generation, and more particularly to devices and methods that use an electron beam to generate X-rays.

### Summary

An x-ray based litho-density tool for measurement of formation surrounding a borehole is provided, the tool including at least an internal length comprising a sonde section, wherein said sonde section further comprises an x-ray source; formation-facing detectors, wherein the formation-facing detectors compromise a formation density detector and a borehole correction detector; a plurality of sonde-dependent electronics; a plurality of tool logic electronics and PSUs; and a reference detector, wherein the reference detector uses a shielding to attenuate the radiation emanating directly from the source, wherein the reference detector is used to correct the measured formation density and to monitor the output of the x-ray source such that the output of the formation-facing detectors used to measure the density of the materials surrounding the borehole is corrected for variations in the x-ray source by modifying the number of counts logged by the formation-facing detectors based on the reference detector's output, wherein the x-ray source is energized by a high-voltage generator that contains a sensing and feedback circuit that provides control input to a high-voltage generator controller, wherein the reference detector provides a spectrum to a density processing unit such that adjustments to the outputs of the formation density detectors and the borehole correction detector are made to account for any variations in the output of the x-ray source and by comparing the reference detector's output variance to a software table for the specific ambient temperature in which the tool is operating.. The invention is as defined in claim 1. Tool logic electronics, PSUs, and one or more detectors used to measure borehole standoff such that other detector responses may be compensated for tool standoff are also provided. Shielding, through-wiring, wear-pads and the like that improve the efficacy and functionality of the tool are also provided.

### Brief Description of the Drawings

Figure 1 illustrates an x-ray based litho-density formation evaluation tool deployed by wireline conveyance into a borehole, wherein the formation density is measured by the tool.
Figure 2 is a layout view of a practical means of exercising the method within the confines of a borehole tool configured to measure formation density and borehole corrections using an x-ray tube as a radiation source.
Figure 3 illustrates a typical reference detector spectrum for a Compton range source, showing Intensity in the y-axis versus photon energy in the x-axis, the windowed region of interest (the region between two specified energies) remains unchanged as the spectrum peak intensity moves.

### Brief Description of Several Example Embodiments

The invention described herein consists of apparatus to use the detected output of a non-isotope-based radiation source tube within a borehole logging tool to determine the correct calibration constant corrections to be substituted during the computation of detector count-rate output prior to, or during, the computation of formation density itself. In borehole formation density logging, it is important to ensure the highest accuracy of data, whereby any variation in that data is a result of the change in scattering and attenuation properties of the formation itself (formation density) or controllable borehole effects. When using electronic radiation emitting source tubes as a replacement for radio-active isotope-based radiation sources, an inherent variability is introduced into the measurement due to the unstable nature of the output of the source tube and its power supply - an issue which is not encountered during the use of highly stable long half-life radio isotopes. Consequently, the variations in the measured data that would normally be attributable to formation density alone can contain a variable component of the instability of the source tube itself. This invention teaches of and a means to measure the output radiation of a source tube and to use this data as an input to a calibration correction algorithm prior to or during density computation.

An example method of practicing the invention comprises a combination of known and new technologies embodied in a new application with respect to radiation physics and formation evaluation measurements for use within the oil and gas industry. The method is further embodied by a means, which may be used to practice the method for use in a water, oil or gas well.

The typical regulatory limit for the amount of ¹³⁷Cs which may be used during a logging operation is a maximum of 1.3 Curie. During density logging operations, a certain number of photons per second are required to enter into the detectors to ensure a high enough statistic for the purposes of data quality consistency and interpretation.

The operations cannot currently be performed using any radiation source other than harmful radioisotopes as the output of an x-ray tube isn't inherently stable enough over time to provide the statistics necessary for the accuracy required of the log, which is typically an uncertainty in measurement of 0.01g/cc density.

By using a reference detector to correct the measured formation density, rather than using a reference detector to attempt to control the variations in the source, the use of x-ray tubes for formation evaluation becomes a real possibility.

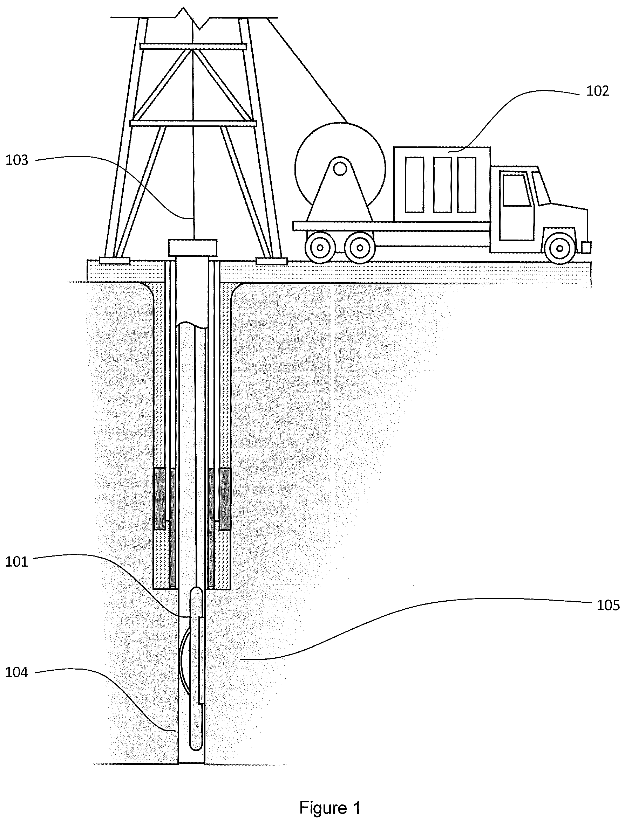

With reference now to the attached Figures, Figure 1 illustrates an x-ray based litho-density formation evaluation tool 101 is deployed by wireline conveyance 102,103 into a borehole 104, wherein the formation 105 density is measured by the tool 101.

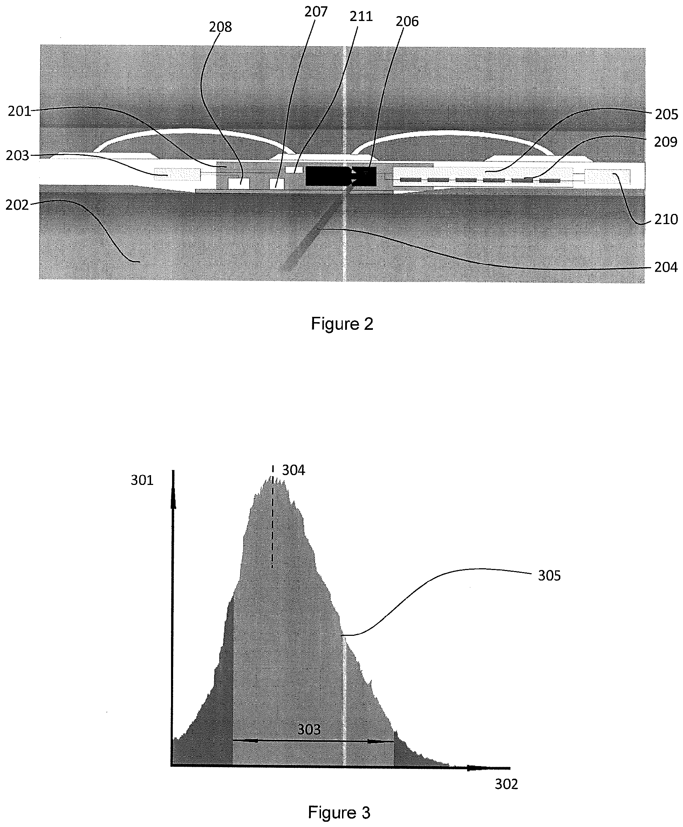

Figure 2 is a layout of a practical means of exercising the method within the confines of a borehole tool configured to measure formation density and borehole corrections using an x-ray tube 206 as a radiation 204 source. The x-ray source 206 produces a beam of x-rays 204 that illuminates the formation 202. The x-ray source output is monitored by a reference detector 211. No direct beam path through the shielding 201 that surrounds the source 206 and detectors 207, 208, 211 is necessary as the reference detector 211 uses the shielding 201 to attenuate the radiation emanating directly from the source 206. The source tube 206 is energized by a high-voltage generator 205 that contains a sensing and feedback circuit 209 that provides control input to the high-voltage generator controller 210. The reference detector 211 provides a spectrum to the density processing unit 203 such that adjustments to the outputs of the formation density detector 208 and borehole correction detector 207 are made to account for any variations in the output of the x-ray source 206.

Figure 3 illustrates a typical reference detector spectrum 305 for a Compton range source, showing Intensity in the y-axis 301 versus photon energy in the x-axis 302, the windowed region of interest 303 (the region between two specified energies) remains unchanged as the spectrum peak intensity 304 moves. The total number of counts within the region of interest form to basis for the calibration coefficient correction computation.

In one example embodiment, the x-ray based litho-density formation evaluation tool 101 is deployed by wireline conveyance 102,103 into a borehole 104, wherein the formation 105 density is measured by the tool 101. The tool 101 is enclosed by a pressure housing 201 which ensures that well fluids are maintained outside of the housing. In a further embodiment, a tool 101 is configured to measure formation density and borehole corrections using an x-ray tube 206 as a radiation 204 source. The x-ray source 206 produces a beam of x-rays 204 that illuminates the formation 202. The x-ray source output is monitored by a reference detector 211. No direct beam path through the shielding 201 that surrounds the source 206 and detectors 207, 208, 211 is necessary as the reference detector 211 uses the shielding 201 to attenuate the radiation emanating directly from the source 206. The source tube 206 is energized by a high-voltage generator 205 that contains a sensing and feedback circuit 209 that provides control input to the high-voltage generator controller 210. The reference detector 211 provides a spectrum to the density processing unit 203 such that adjustments to the outputs of the formation density detector 208 and borehole correction detector 207 may be made to account for any variations in the output of the x-ray source 206. In a further embodiment, the reference detector 211 is made of a scintillator crystal, such as Sodium Iodide, Cesium Iodide or Lanthanum Bromide, with an embedded micro-isotope, to be used in detector gain stabilization, and is located in the radiation shielding 201 surrounding a source tube 206. The output spectrum 305 is analyzed and a region of interest 303 applied to the spectrum 305. The total number of counts within the region of interest 303 form the basis of an input to a calibration coefficient correction computation. In a further embodiment, the borehole logging tool 101 would function such that the source tube 206 illuminates a volume of formation 202, wherein the formation-facing detectors 207,208, which are also gain stabilized by an embedded micro-isotope technique, would record the resultant spectra by collecting the scattered photons emanating from the formation. The number of counts logged by the formation-facing detectors 207,208 would be modified, either as a computational step prior to, or during the computation of formation density based on the reference detector's 211 output. This is achieved by comparing the reference detector's 211 output variance to a software table for the specific ambient temperature in which the tool 101 is operating. The table would be created during the initial factory-based characterization testing of the tool 101, wherein the tool 101 would be placed against volumes of materials of known density, such as magnesium and aluminum, which contain a detector placed within the volume of the known density block, within the illumination volume of the source tube. The tool would be operated during these characterization tests and the count rate from within the region of interest 303 of the reference detector 211 and the calibration block detector would be recorded as the temperature of the tool is increased in discrete steps up to the highest anticipated wellbore temperature. The variation between the absolute detector located in the calibration blocks and the reference detector 211 as a function of ambient temperature would then be tabulated and included in the firmware for that specific tool 101. This table of calibration coefficients can then be used during density computation to correct the formation-facing detectors' 207,208, output for any variations in the source-tube's 206 output as a function of temperature based upon the known 'absolute' source output relative to the tabled reference output. In a further embodiment, the density processing is performed within the tool 101. In a further embodiment, the raw count data from the region of interest 303 of the gain-stabilized formation-facing detectors 207,208 would be sent to topside in addition to the computed calibration coefficient corrected count rate for each detector, along with the count rate data from the reference detector. The correction computation would be performed within the logging control unit located on topsides.

In a further embodiment, the resultant data can be utilized to form a log stability quality index parameter during the final production of the density log versus borehole depth.

In a still further embodiment, the tool 101 is located within a logging-while-drilling (LWD) string, rather than conveyed by wireline.

In a further embodiment still, the LWD provisioned tool 101 would be powered by mud turbines.

In yet another embodiment, the tool 101 is combinable with other measurement tools such as neutron-porosity, natural gamma and/or array induction tools.

Additionally, the invention allows for the inherent physical differences between all manufactured photo-multiplier tubes and the stabilization gain control voltages necessary to produce identical spectral outputs - as the output of the reference detector sub-system and radiation source and power supply are all functionally characterized as a whole system, rather than individual parts, the statistical output of the formation-facing detectors can be modified against a system-specific temperature dependent calibration table to ensure that all manufactured systems have identical statistical output.

Furthermore, the inherent stability of the traditional embedded micro-isotope technique for formation-facing detector gain stabilization is not affected by this measurement. As a result, the raw output count data would be logged/recorded un-altered. The tabled coefficient amendments to the data would only be applied to the data prior to or during the final density calculation - if any apparent discrepancy or out-of-bound data were to be produced by the reference detector, it can be filtered by the operator as the raw 'unaltered' detector data would be available.

Moreover, the invention does not require the complexities of a channel between the source tube and the reference detector to permit the passage of radiation. The reference detector can be located within a void within the radiation shielding material surrounding the source tube such that the distance between the source tube and the reference detector is such that there is enough radiation to produce a reasonable statistical count rate but is attenuated enough to ensure that the reference detector does not saturate from too many incoming photons.

Also, the invention does not require the monitoring of energy peaks, other than what is inherent to the traditional embedded micro-isotope technique for formation-facing detector gain stabilization in the detector electronics. As a result, the necessity for beam-hardening or spectrum modifying filters is avoided.

Additionally, as a region of interest is employed while analyzing the output spectrum of reference detector, any undesirable effects associated with the modification of the form of the beam spectrum due to the radiation shielding can be circumvented as the region of interest can be tuned to select a spectral region above that of any major spectrum-clipping or hardening materials within the shielding.

The foregoing specification is provided only for illustrative purposes, and is not intended to describe all possible aspects of the present invention. While the invention has herein been shown and described in detail with respect to several exemplary embodiments, those of ordinary skill in the art will appreciate that minor changes to the description, and various other modifications, omissions and additions may also be made without departing from the scope thereof. The scope of the invention is defined by the appended claims.

## Claims

1. An x-ray based litho-density tool (101) for measurement of formation surrounding a borehole, said tool comprising:
an internal length comprising a sonde section, wherein said sonde section further comprises an x-ray source (206);
formation-facing detectors (207, 208), wherein the formation-facing detectors comprise a formation density detector (208) and a borehole correction detector (207);
a plurality of sonde-dependent electronics;
a plurality of tool logic electronics and PSUs; and
a reference detector (211), wherein the reference detector (211) uses a shielding (201) to attenuate the radiation emanating directly from the source (206),
wherein said reference detector (211) is used to correct the measured formation density and to monitor the output of the x-ray source (206), such that the output of the formation-facing detectors (208) used to measure the density of the materials surrounding the borehole is corrected for variations in the x-ray source (206) by modifying the number of counts logged by the formation-facing detectors (207, 208) based on the reference detector's output, wherein the x-ray source (206) is energized by a high-voltage generator (205) that contains a sensing and feedback circuit (209) that provides control input to a high-voltage generator controller (210), wherein the reference detector (211) provides a spectrum to a density processing unit (203) such that adjustments to the outputs of the formation density detectors (208) and the borehole correction detector (207) are made to account for any variations in the output of the x-ray source (206) and by comparing the reference detector's (211) output variance to a software table for the specific ambient temperature in which the tool (101) is operating.

2. The tool of Claim 1, further comprising a detector used to measure borehole standoff such that other detector responses may be compensated for tool standoff.

3. The tool of Claim 1, further comprising a tungsten shield (201).

4. The tool of Claim 1, wherein the tool is configured so as to permit through wiring.

5. The tool of Claim 1, wherein the tool further comprises a wear-pad disposed such that the source and detector assembly may be pressed against the side of the borehole to reduce borehole effects.

## Patentansprüche

1. Röntgen-Lithodichtewerkzeug (101) zur Durchführung von Messungen an einer ein Bohrloch umgebenden Formation, wobei das Werkzeug umfasst:
einen inneren Abschnitt mit einem Sondenabschnitt, wobei der Sondenabschnitt ferner eine Röntgenquelle (206) umfasst;
Detektoren (207, 208), die der Formation zugewandt sind, wobei die der Formation zugewandten Detektoren umfassen:
einen Formationsdichtedetektor (208) und
einen Bohrlochkorrekturdetektor (207);
eine Mehrzahl sondenspezifischer Elektronikeinheiten;
eine Mehrzahl von Werkzeugsystem- und PSU-Logikelektroniken; und
einen Referenzdetektor (211), wobei der Referenzdetektor (211) eine Abschirmung (201) verwendet, um die direkt von der Quelle (206) ausgehende Strahlung zu dämpfen,
wobei der Referenzdetektor (211) dazu verwendet wird, die gemessene Formationsdichte zu korrigieren und die Ausgangsleistung der Röntgenquelle (206) zu überwachen, so dass die Ausgänge der der Formation zugewandten Detektoren (208), die zur Messung der Dichte der das Bohrloch umgebenden Materialien verwendet werden, in Bezug auf Schwankungen der Röntgenquelle (206) korrigiert werden, indem die von den der Formation zugewandten Detektoren (207, 208) registrierten Zählwerte auf der Grundlage der Ausgangsleistung des Referenzdetektors modifiziert werden, wobei die Röntgenquelle (206) mittels eines Hochspannungsgenerators (205) mit Strom versorgt wird, der eine Detektions- und Rückkopplungsschaltung (209) enthält, die dazu dient, ein Steuersignal an eine Steuereinrichtung (210) des Hochspannungsgenerators zu liefern, wobei der Referenzdetektor (211) ein Spektrum an eine Dichteverarbeitungseinheit (203) liefert, so dass bestimmte Anpassungen an den Ausgängen des Formationsdichtedetektors (208) und des Bohrlochkorrekturdetektors (207) vorgenommen werden, um etwaige Variationen der Ausgangsleistung der Röntgenquelle (206) zu berücksichtigen, und mittels eines Vergleichs der Ausgangsvarianz des Referenzdetektors (211) mit einer Software-Tabelle in Bezug auf die spezifische Umgebungstemperatur, in der das Werkzeug (101) betrieben wird.

2. Werkzeug nach Anspruch 1, ferner umfassend einen Detektor zur Messung des ringförmigen Abstands im Bohrloch, so dass weitere Detektorantworten in Bezug auf den ringförmigen Abstand des Werkzeugs kompensiert werden können.

3. Werkzeug nach Anspruch 1, ferner umfassend eine Wolframabschirmung (201).

4. Werkzeug nach Anspruch 1, wobei das Werkzeug so ausgelegt ist, dass eine Durchgangsverkabelung ermöglicht wird.

5. Werkzeug nach Anspruch 1, wobei das Werkzeug ferner eine Verschleißplatte umfasst, die so angeordnet ist, dass die Quellen- und Detektoranordnung gegen die Seite des Bohrlochs gedrückt werden kann, um Bohrlocheffekte zu reduzieren.

## Revendications

1. Outil de litho-densité (101) à base de rayons X, permettant de faire des mesures d'une formation entourant un trou de forage, ledit outil comprenant :
un tronçon interne comportant une section de sonde, ladite section de sonde comprenant en outre une source de rayons X (206) ;
des détecteurs (207, 208) faisant face à la formation, les détecteurs faisant face à la formation comprenant :
un détecteur (208) de densité de la formation et un détecteur (207) de correction du trou de forage ;
une pluralité d'électroniques dépendantes de la sonde ;
une pluralité d'électroniques logiques d'outil et de PSU ; et
un détecteur de référence (211), le détecteur de référence (211) utilisant un blindage (201) pour atténuer le rayonnement émanant directement de la source (206),
dans lequel ledit détecteur de référence (211) est utilisé pour corriger la densité mesurée de la formation et pour surveiller la sortie de la source de rayons X (206), de sorte que la sortie des détecteurs (208) faisant face à la formation, utilisés pour mesurer la densité des matériaux entourant le trou de forage, soit corrigée par rapport aux variations de la source de rayons X (206) au moyen de la modification du nombre de comptages consignés par les détecteurs (207, 208) faisant face à la formation sur la base de la sortie du détecteur de référence, la source de rayons X (206) étant mise sous tension à l'aide d'un générateur à haute tension (205) contenant un circuit (209) de détection et de retour d'informations servant à fournir une entrée de commande à un dispositif de commande (210) du générateur à haute tension, le détecteur de référence (211) fournissant un spectre à une unité (203) de traitement de densité, de sorte que certains réglages aux sorties des détecteurs (208) de densité de la formation et du détecteur (207) de correction du trou de forage soient effectués de façon à tenir compte des variations quelconques de la sortie de la source de rayons X (206), et au moyen de la comparaison de la variance de sortie du détecteur de référence (211) avec une table logicielle concernant la température ambiante spécifique dans laquelle l'outil (101) est en fonctionnement.

2. L'outil de la Revendication 1, comprenant en outre un détecteur utilisé pour mesurer la distance annulaire du trou de forage, de sorte que d'autres réponses des détecteurs puissent être compensées par rapport à la distance annulaire de l'outil.

3. L'outil de la Revendication 1, comprenant en outre un blindage de tungstène (201).

4. L'outil de la Revendication 1, dans lequel l'outil est conçu de façon à permettre un câblage traversant.

5. L'outil de la Revendication 1, dans lequel l'outil comprend en outre une plaque d'usure disposée de sorte que l'ensemble source et détecteurs puisse être poussé contre le côté du trou de forage afin de réduire les effets du trou de forage.
